(19) Europäisches Patentamt
European Patent Office
Office européen des brevets

(11) EP 1 273 897 B1

(12) **FASCICULE DE BREVET EUROPEEN**

(45) Date de publication et mention
de la délivrance du brevet:
**25.02.2015 Bulletin 2015/09**

(51) Int Cl.:
***G01M 3/04*** *(2006.01)*

(21) Numéro de dépôt: **02291608.4**

(22) Date de dépôt: **28.06.2002**

(54) **Dispositif numérique de détection et de localisation de fuites de liquide**

Digitale Vorrichtung zur Feststellung und Ortung von Flüssigkeitslecks

Digital device for detecting and localising liquid leaks

(84) Etats contractants désignés:
**AT BE CH CY DE DK ES FI FR GB GR IE IT LI LU MC NL PT SE TR**

(30) Priorité: **29.06.2001 FR 0108619**

(43) Date de publication de la demande:
**08.01.2003 Bulletin 2003/02**

(73) Titulaire: **TTK**
**78190 Trappes (FR)**

(72) Inventeur: **Balatchev, Stephan**
**75015 Paris (FR)**

(74) Mandataire: **Pontet Allano & Associes**
**Parc Les Algorithmes, Bâtiment Platon**
**CS 70003 Saint Aubin**
**91192 Gif sur Yvette Cedex (FR)**

(56) Documents cités:
**EP-A- 0 477 167      EP-A1- 0 018 916**
**WO-A-97/04463      FR-A- 2 761 154**
**US-A- 5 218 554      US-A- 5 537 045**
**US-A- 5 974 862      US-A- 5 987 990**

## Description

La présente invention concerne un dispositif numérique de détection et de localisation de fuites de liquide.

Actuellement, la détection et la localisation de fuites de liquide, ou d'évènements en général, sont réalisées à l'aide de câbles détecteurs présentant des caractéristiques électriques connues et d'une unité centrale assurant la détection et la localisation des évènements. Le procédé de détection repose sur le changement des propriétés électriques du milieu physique des éléments détecteurs, tel que le passage de courant en cas de fuites de fluides conducteurs ou le changement des propriétés diélectriques et/ou magnétiques pour la détection de tout type de fluide, gaz ou liquide. La localisation des événements est alors assurée par la mesure de la résistance électrique ou de l'impédance entre le début du circuit de localisation et l'événement survenu.

Cependant, ces systèmes présentent des inconvénients dans la mesure où :

ils ne permettent que la détection et la localisation d'un seul événement par circuit, la résistance de fuite étant inconnue et variable, le courant dans le circuit étant alors la somme des courants passant par chaque fuite et la valeur mesurée indiquée étant une localisation intermédiaire n'ayant aucun lien avec la réalité ;

la connaissance de l'importance des défauts n'est pas aisée puisqu'il est nécessaire de connaître avec précision les caractéristiques électriques des fluides et les conditions d'apparition de fuites, ce qui est difficilement réalisable ;

la présence de contaminations, telles que de la poussière électrostatique, des liquides faiblement conducteurs ou l'humidité ambiante, sur les dispositifs de détection décale la localisation de l'événement pour les raisons invoquées plus haut et la fiabilité du système décroît ;

la localisation des coupures de fils électriques est uniquement possible avec les systèmes de type « guide d'ondes » qui sont beaucoup plus coûteux et difficiles à mettre en oeuvre ;

l'installation de tels systèmes dans des endroits à forte émission d'impulsions électromagnétiques est problématique et liée à l'installation de filtres et de blindages coûteux et difficiles à mettre en oeuvre ;

la détection et la localisation étant électriques, il est impossible de découpler galvaniquement les dispositifs de détection et l'unité centrale ou la liaison en utilisant d'autres types de media comme des fibres optiques, des liaisons radio ou infrarouge, etc ;

l'utilisation de longues liaisons électriques nécessite un réglage du système afin que la résistance électrique des câbles de liaison soit prise en compte par l'unité de localisation.

Ainsi, dans la demande de brevet FR-A-2 761 154 appartenant au demandeur, on a proposé un dispositif de détection et de localisation d'évènements tels que des fuites de liquide. Ce dispositif est basé sur un procédé de génération d'un signal alternatif à fréquence variable, cette dernière étant fonction de la localisation de l'événement. Ce dispositif nécessite un système de traitement de l'information pour déduire la résistance et ensuite la localisation en unités de mesure appropriées. A cet effet, le dispositif comprend un oscillateur qui génère un signal à fréquence variable, le câble détecteur faisant partie de l'oscillateur.

La détermination de la résistance, sa numérisation et la déduction de la localisation sont laissées à l'unité de gestion. Le signal en sortie de l'oscillateur est donc fonction de l'importance de la fuite et une variation de la quantité de liquide pendant la numérisation du signal peut fausser la mesure.

EP 0018916 décrit un dispositif de detection de fuite comprenant une pluralité de capteurs numériques autonomes et indépendants utilisant un pont de Wheatstone pour la detection. Dans ce dispositif la fuite est localisée en balayant plusieurs capteurs.

Afin de pallier ces inconvénients, la présente invention a pour but de proposer un dispositif numérique de détection et de localisation d'événements tels que des fuites de liquide.

A cet effet, l'invention a pour objet un dispositif de détection et de localisation de fuites de liquide, caractérisé en ce qu'il comporte une pluralité de capteurs numériques de caractéristiques électriques, autonomes et indépendants, disposés le long d'un circuit à surveiller, lesdits capteurs étant reliés à une unité centrale de gestion et de présentation des informations numériques provenant des capteurs.

Ainsi, de manière avantageuse, la détection et la localisation des événements sont assurées par des capteurs autonomes se trouvant directement sur le lieu où surviennent les fuites. Les défauts sont donc détectés et localisés sur le lieu même où ils surviennent.

Le dispositif selon l'invention est basé sur la détermination directe de la localisation de l'événement sans l'aide d'un système supplémentaire de traitement de l'information ni d'une méthode directe de mesure de la résistance.

De plus, chaque capteur surveille une zone précise indépendante de celles surveillées par les autres capteurs. Il est donc possible de détecter autant d'évènements qu'il y a de capteurs mis en place.

De même, les perturbations électromagnétiques n'influencent que la localisation du capteur qui les subit et la zone surveillée étant très limitée, les conséquences d'exploitation sont pratiquement nulles.

De préférence, les capteurs comportent au moins des moyens de mesure de valeurs électriques et des moyens de numérisation desdites valeurs électriques.

Chaque capteur est propre à détecter et localiser des évènements de nature différente tels que, par exemple, des fuites de liquide électriquement conducteur, de liquide non conducteur, de chute de pression.

Chaque capteur est connecté à l'unité centrale en tant qu'abonné et possède son numéro d'identification logique.

De préférence, chaque capteur est alimenté électriquement par un câble de transmission numérique ou bien l'alimentation électrique est déportée.

De manière à envoyer les informations mesurées par le capteur vers l'unité centrale, la connexion entre chaque capteur et l'unité centrale est réalisée à l'aide de moyens appropriés tels qu'un bus de données numérique ou bien des moyens de transmission sans fil tels que des liaisons radio, des liaisons infrarouge, des liaisons ultrasons.

La détection et la localisation des coupures dans les éléments de détection et de localisation sont également effectuées par les capteurs autonomes. La discontinuité de chaque composant du dispositif de détection est donc déterminée sans ambiguïté.

De même de manière avantageuse, le dispositif permet également de localiser une coupure d'un élément de connexion numérique entre l'unité centrale et les capteurs autonomes puisqu'il suffit de scruter périodiquement les capteurs un par un. La non réponse ou la réponse erronée d'un capteur indique précisément l'élément défectueux de la connexion numérique centrale-capteur.

De manière avantageuse, la transmission de l'information sur les défauts s'effectuant de manière numérique, on peut mettre en place des capteurs à de très longues distances sans aucun réglage ni adaptation.

Les capteurs peuvent être montés en série ou bien en parallèle. De même, la dérivation en T ne présente aucune difficulté.

L'invention concerne également un procédé de détection et localisation de fuites de liquide, caractérisé en ce que des capteurs numériques de caractéristiques électriques, placés le long d'un circuit de liquide à surveiller mesurent une résistance électrique et on numérise la valeur mesurée, l'information numérique étant ensuite transmise par des moyens appropriés tels qu'un bus de données numérique et/ou des moyens de transmission sans fil à l'unité centrale qui gère et signale les informations reçues des capteurs.

De préférence, le capteur numérique comporte un pont de résistances tel qu'un pont de Wheatstone, et on détecte une fuite par déséquilibre du pont par le courant de fuite puis on localise la fuite en faisant varier la résistance variable du pont.

Ainsi, le dispositif selon un mode de réalisation préféré de l'invention est constitué d'un capteur comportant un pont de résistances du type pont de Wheatstone comprenant deux résistances connues R2 et R3, une série de résistances R1.1-R1.n de valeurs différentes en lieu et place d'une résistance variable, associées éventuellement respectivement à un interrupteur S1.1-S1.n, un fil résistif de résistance Rc constituant l'élément de détection de fuite ainsi qu'un comparateur électronique fournissant en sortie un signal binaire et une source d'énergie ainsi qu'une référence électrique.

Ainsi, l'information numérique est obtenue directement à l'issue de la séquence d'équilibrage du pont de Wheatstone, sous la forme d'un codage de la localisation de l'événement.

L'utilisation d'un pont de Wheatstone permet avantageusement d'être insensible à la variation de l'importance de la fuite et la mesure de résistance est toujours fiable.

L'invention permet une très grande souplesse de conception et une très grande miniaturisation du dispositif de détection et de localisation de fuites de fluide.

On décrira maintenant l'invention plus en détail à l'aide d'exemples de réalisation en référence au dessin annexé dans lequel :

la figure 1 représente un schéma de principe d'un dispositif selon l'invention ;

la figure 2 représente schématiquement un pont de Wheatstone selon l'état de la technique ;

la figure 3 représente un pont de Wheatstone pour un capteur selon l'invention ; et

la figure 4 représente un pont de Wheatstone selon une variante préférée de l'invention.

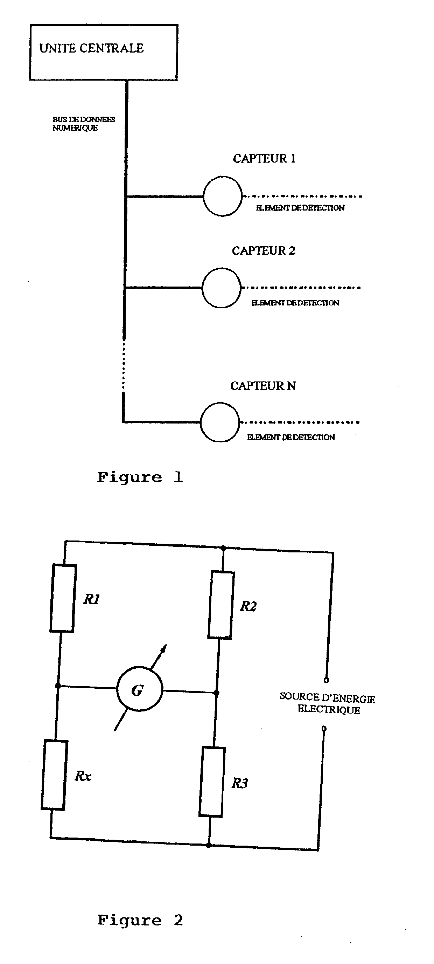

Comme on peut le voir à la figure 1, l'information émise par le capteur étant numérique, il est possible d'associer plusieurs capteurs autonomes dans des sous-ensembles.

Pour le dispositif selon l'invention, on a choisi une méthode de mesure indirecte de la résistance qui utilise un pont de Wheatstone de l'état de la technique qui comporte quatre résistance R1, R2, R3 et Rx et un galvanomètre (voir la figure 2). La résistance à déterminer est Rx qui est connectée dans l'une des branches du pont.

Lorsque le pont est équilibré, l'indication du galvanomètre G est zéro. La condition d'équilibrage du pont est :

$$R1.R2 = Rx.R3.$$

Le pont peut être équilibré par n'importe quelle résistance des résistances connues R1, R2, R3 et il n'est pas nécessaire d'effectuer de mesures ou de calculs.

Dans l'utilisation du pont de Wheatstone dans un capteur de fuite, on utilise le fait que la mesure effectuée à l'aide de ce pont de résistances est fiable quel que soit le courant passant dans les branches du pont.

Dans le capteur, l'élément de détection est constitué par un fil résistif dont la résistance totale est connue et qui est égale à Rc.

La résistance R1 variable sert en tant que composant d'équilibrage du pont selon la règle R1.(R3+Rc-Rx)=R2.Rx.

La valeur des résistances R1, R2, R3 et Rc étant connues, il est simple d'obtenir la valeur de résistance Rx qui apporte avec précision l'information sur la distance entre le début de l'élément de détection et l'événement.

La première étape consiste donc à déterminer la présence éventuelle d'une fuite de liquide conducteur. Il suffit de choisir une valeur de R1 telle que le pont soit toujours déséquilibré quel que soit l'état de l'élément de localisation Rc telle que par exemple R1.R3 >> R2.Rc.

S'il n'y a pas de fuite, il n'y aura pas de courant passant entre la source d'énergie et le pont, le galvanomètre indiquant alors 0.

Lorsqu'il y a une fuite de liquide conducteur, la présence du liquide conducteur entre l'élément de détection Rc et la référence induit un courant de fuite qui déséquilibre le pont et le galvanomètre l'indique, détectant ainsi la fuite.

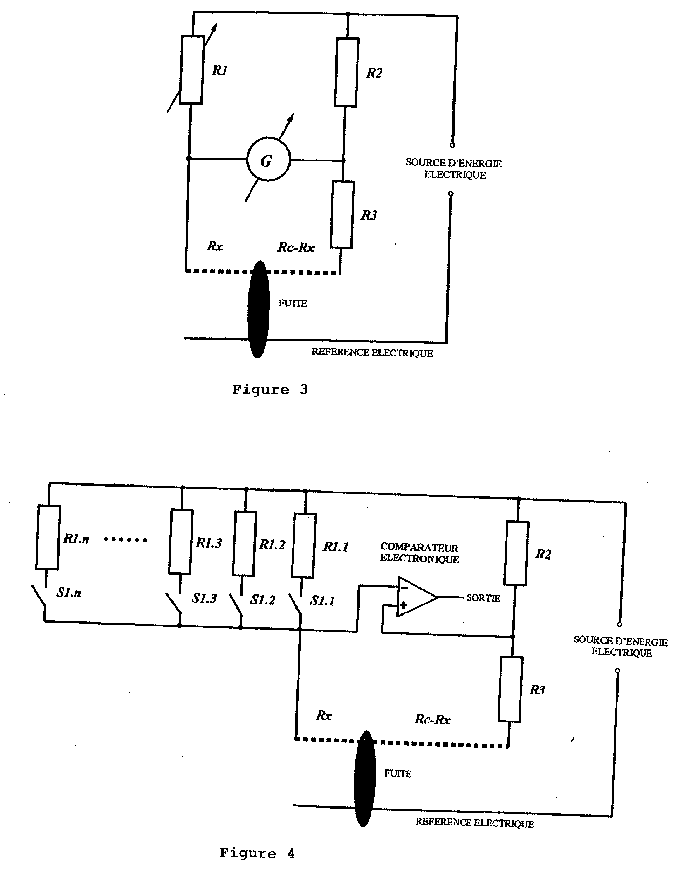

La localisation est ensuite obtenue en déterminant la résistance Rx (voir les figures 3 et 4) en équilibrant le pont selon la formule R1. (R3+Rc-Rx)=R2.Rx.

Quel que soit le courant de fuite et la résistance de fuite, la condition d'équilibre ne change pas et, de ce fait, la détermination de Rx est très fiable.

De manière à automatiser le schéma analogique représenté à la figure 3, on remplace la résistance R1 variable par une série de résistances R1.1-R1.n qui présentent toutes des valeurs différentes. A la place du galvanomètre, on met en place un comparateur électronique dont le fonctionnement est analogue à celui du galvanomètre mais qui permet la sortie d'un signal binaire directement.

Ainsi, chaque capteur comporte un pont de résistances du type pont de Wheatstone comprenant deux résistances connues R2 et R3, une série de résistances de valeurs différentes R1.1-R1.n en lieu et place d'une résistance variable, un fil résistif de résistance Rc constituant l'élément de détection de fuite ainsi qu'un comparateur électronique fournissant en sortie un signal binaire, et comportant également une source d'énergie et une référence électrique.

A chaque résistance R1.1-R1.n, on associe un interrupteur S1.1-S1.n et la composition ainsi obtenue permet le codage direct de la localisation de la fuite.

Lorsqu'une fuite a lieu, la présence du liquide conducteur entre l'élément de détection Rc et la référence électrique induit un courant de fuite qui déséquilibre le pont et le comparateur électronique l'indique, détectant ainsi la fuite.

Ensuite, on fait varier la résistance R1 constituée des résistance R1.1-R1.n par la connexion de l'une de ces résistances ou par la mise en parallèle de plusieurs résistances en fonction de l'état des interrupteurs S1.1-S1.n.

La valeur de localisation de l'événement est obtenue par les positions des interrupteurs S1.1-S1.n lorsque la condition de fin de mesure est remplie-basculement du comparateur.

**Revendications**

1. Dispositif de détection et de localisation de fuites de liquide, comprenant une pluralité de capteurs numériques de caractéristiques électriques, autonomes et indépendants, disposés le long d'un circuit à surveiller, lesdits capteurs étant reliés à une unité centrale de gestion et de présentation des informations numériques provenant des capteurs, au moins un capteur comprenant un pont de résistances prévu pour être déséquilibré par la fuite à détecter et à localiser, ledit dispositif étant **caractérisé en ce qu'**il comprend en outre des moyens pour équilibrer ledit pont de résistances déséquilibré pour localiser ladite fuite.

2. Dispositif selon la revendication 1, **caractérisé en ce que** le pont de résistances est un pont de Wheatstone.

3. Dispositif selon l'une quelconque des revendications précédentes, **caractérisé en ce que** les moyens pour équilibrer le pont de résistance comprennent une résistance variable (R1).

4. Dispositif selon l'une quelconque des revendications 1 ou 2, **caractérisé en ce que** les moyens pour équilibrer le pont de résistances comprennent unes série de résistances (R1.1-R1.n).

5. Dispositif selon l'une quelconque des revendications précédentes, Les moyens pour équilibrer le pont comprennent un galvanomètre (G) ou un comparateur électronique.

6. Dispositif selon l'une quelconque des revendications 1 ou 2, **caractérisé en ce que** le pont de résistance comprend deux résistances connues R2 et R3, une série de résistances R1.1-R1.n de valeurs différentes en lieu et place d'une résistance variable, associées éventuellement respectivement à un interrupteur S1.1-S1.n, un fil résistif de résistance Rc constituant l'élément de détection de fuite ainsi qu'un comparateur électronique fournissant en sortie un signal binaire et une source d'énergie ainsi qu'une référence électrique.

**7.** Dispositif selon l'une quelconque des revendications précédentes, **caractérisé en ce que** chaque capteur est connecté à l'unité centrale en tant qu'abonné, chaque capteur possédant son numéro d'identification logique.

**8.** Dispositif selon l'une quelconque des revendications précédentes, **caractérisé en ce que** chaque capteur est alimenté électriquement par un câble de transmission numérique.

**9.** Dispositif selon l'une quelconque des revendications 1 à 7, **caractérisé en ce que** l'alimentation électrique de chaque capteur est déportée.

**10.** Dispositif selon l'une quelconque des revendications précédentes, **caractérisé en ce que** la connexion entre chaque capteur et l'unité centrale est réalisée à l'aide de moyens de transmission sans fil tels que des liaisons radio, des liaisons infrarouge, des liaisons ultrasons.

**11.** Dispositif selon l'une quelconque des revendications 1 à 7, **caractérisé en ce que** la connexion entre chaque capteur et l'unité centrale est réalisée à l'aide d'un bus de données numérique.

**12.** Dispositif selon l'une quelconque des revendications précédentes, **caractérisé en ce que** les capteurs sont montés en série.

**13.** Dispositif selon l'une quelconque des revendications précédentes, **caractérisé en ce que** les capteurs sont montés en parallèle.

**14.** Procédé de détection et localisation de fuites de fluide, **caractérisé en ce que** des capteurs numériques de caractéristiques électriques, placés le long d'un circuit de fluide à surveiller mesurent une résistance électrique numérique, et l'information numérique est ensuite transmise à l'unité centrale par des moyens appropriés tels qu'un bus de données numérique et/ou des moyens de transmission sans fil, qui gère et signale les informations reçues des capteurs., **caractérisé en ce qu'**au moins un capteur numérique comporte un pont de résistances et on détecte une fuite par déséquilibre du pont par le courant de fuite puis on localise la fuite en faisant varier la résistance variable du pont.

**Patentansprüche**

**1.** Vorrichtung zur Erkennung und Lokalisierung von Flüssigkeitslecks, umfassend eine Vielzahl von selbstständigen und unabhängigen digitalen Elektrischeneigenschaften-Sensoren, die entlang eines zu überwachenden Kreises angeordnet sind, wobei die Sensoren mit einer Zentraleinheit zur Verwaltung und Darstellung der von den Sensoren stammenden digitalen Informationen verbunden sind, wobei wenigstens ein Sensor eine Widerstandsbrücke umfasst, die dazu vorgesehen ist, durch das zu erkennende und zu lokalisierende Leck unabgeglichen zu werden, wobei die Vorrichtung **dadurch gekennzeichnet ist, dass** sie ferner Mittel zum Abgleichen der unabgeglichener Widerstandsbrücke, um das Leck zu lokalisieren, umfasst.

**2.** Vorrichtung nach Anspruch 1, **dadurch gekennzeichnet, dass** die Widerstandsbrücke eine Wheatstonebrücke ist.

**3.** Vorrichtung nach einem der vorhergehenden Ansprüche, **dadurch gekennzeichnet, dass** die Mittel zum Abgleichen der Widerstandsbrücke einen Regelwiderstand (R1) umfassen.

**4.** Vorrichtung nach einem der Ansprüche 1 oder 2, **dadurch gekennzeichnet, dass** die Mittel zum Abgleichen der Widerstandsbrücke eine Reihe von Widerständen (R1.1-R1.n) umfassen.

**5.** Vorrichtung nach einem der vorhergehenden Ansprüche, **dadurch gekennzeichnet, dass** die Mittel zum Abgleichen der Brücke ein Galvanometer (G) oder einen elektronischen Komparator umfassen.

**6.** Vorrichtung nach einem der Ansprüche 1 oder 2, **dadurch gekennzeichnet, dass** die Widerstandsbrücke zwei bekannte Widerstände R2 und R3, eine Reihe von Widerständen R1.1-R1.n mit unterschiedlichen Werten anstelle eines Regelwiderstandes, die eventuell jeweils einem Schalter S1.1-S1.n zugeordnet sind, einen ohmschen Widerstandsdraht Rc, der das Leckerkennungselement bildet, sowie einen elektronischen Komparator, der am Ausgang ein binäres Signal liefert, und eine Energiequelle sowie eine elektrische Referenz umfasst.

**7.** Vorrichtung nach einem der vorhergehenden Ansprüche, **dadurch gekennzeichnet, dass** jeder Sensor mit der Zentraleinheit als Teilnehmer verbunden ist, wobei jeder Sensor seine logische Identifikationsnummer besitzt.

**8.** Vorrichtung nach einem der vorhergehenden Ansprüche, **dadurch gekennzeichnet, dass** jeder Sensor über ein digitales Übertragungskabel elektrisch versorgt wird.

**9.** Vorrichtung nach einem der Ansprüche 1 bis 7, **da-**

**durch gekennzeichnet, dass** die elektrische Versorgung eines jeden Sensors abgesetzt ist.

10. Vorrichtung nach einem der vorhergehenden Ansprüche,
**dadurch gekennzeichnet, dass** die Verbindung zwischen jedem Sensor und der Zentraleinheit mit Hilfe von drahtlosen Übertragungsmitteln, wie Funkverbindungen, Infrarotverbindungen, Ultraschallverbindungen, hergestellt ist.

11. Vorrichtung nach einem der Ansprüche 1 bis 7, **dadurch gekennzeichnet, dass** die Verbindung zwischen jedem Sensor und der Zentraleinheit mit Hilfe eines digitalen Datenbusses hergestellt ist.

12. Vorrichtung nach einem der vorhergehenden Ansprüche,
**dadurch gekennzeichnet, dass** die Sensoren in Reihe geschaltet sind.

13. Vorrichtung nach einem der vorhergehenden Ansprüche,
**dadurch gekennzeichnet, dass** die Sensoren parallel geschaltet sind.

14. Verfahren zur Erkennung und Lokalisierung von Flüssigkeitslecks, **dadurch gekennzeichnet, dass** digitale Elektrischeneigendschaften-Sensoren, die entlang eines zu überwachenden Flüssigkeitskreises angeordnet sind, einen digitalen elektrischen Widerstand messen und die digitale Information anschließend durch geeignete Mittel, wie einen digitalen Datenbus und/oder drahtlose Übertragungsmittel, an die Zentraleinheit übertragen wird, welche die von den Sensoren empfangenen Informationen verwaltet und anzeigt, **dadurch gekennzeichnet, dass** wenigstens ein digitaler Sensor eine Widerstandsbrücke umfasst und ein Leck dadurch erkannt wird, dass die Brücke durch den Leckstrom unabgeglichen ist, anschließend das Leck durch Verändern des Regelwiderstandes der Brücke lokalisiert wird.

**Claims**

1. Device for the detection and location of liquid leaks, comprising a plurality of digital sensors, autonomous and independent, for sensing electrical characteristics, applied along a circuit to be monitored, said sensors being connected to a central unit for the management and presentation of digital data originating from the sensors, at least one sensor comprising a resistive bridge that is provided to be unbalanced by the leak to be detected and located, said device being **characterized in that** it also comprises means for balancing said unbalanced resistive bridge in order to locate said leak.

2. Device according to claim 1, **characterized in that** the resistive bridge is a Wheatstone bridge.

3. Device according to any of the preceding claims, **characterized in that** the means for balancing the resistive bridge comprise a variable resistor (R1).

4. Device according to any one of claims 1 or 2, **characterized in that** the means for balancing the resistive bridge comprise a series of resistors (R1.1-R1.n).

5. Device according to any one of the preceding claims, in that the means for balancing the bridge comprise a galvanometer (G) or an electronic comparator.

6. Device according to any one of claims 1 or 2, **characterized in that** the resistive bridge comprises two known resistors R2 and R3, a series of resistors R1.1-R1.n of different values instead of and in place of a variable resistor, optionally associated respectively with a switch S1.1-S1.n, a resisting wire having a resistance Rc constituting the leak detection element as well as an electronic comparator producing a binary output signal and a supply source as well as an electrical reference.

7. Device according to any one of the preceding claims, **characterized in that** each sensor is connected to the central unit as a subscriber, each sensor possessing its own logic identification number.

8. Device according to any one of the preceding claims, **characterized in that** each sensor is electrically powered by a digital transmission cable.

9. Device according to any one of claims 1 to 7, **characterized in that** the electrical power of each sensor is remote.

10. Device according to any one of the preceding claims, **characterized in that** the connection between each sensor and the central unit is carried out using wireless transmission means such as radio, infrared or ultrasound.

11. Device according to any one of the claims 1 to 7, **characterized in that** the connection between each sensor and the central unit is carried out by means of a digital data bus.

12. Device according to any one of the preceding claims, **characterized in that** the sensors are mounted in series.

13. Device according to any one of the preceding claims, **characterized in that** the sensors are mounted in parallel.

**14.** Method for the detection and location of fluid leaks, **characterized in that** digital sensors for sensing electrical characteristics, placed along a fluid circuit to be monitored, measure a digital electrical resistance, and the digital data is then transmitted to the central unit by appropriate means such as a digital data bus and/or a wireless transmission system, which manages and flags the data received from the sensors, **characterized in that** at least one digital sensor comprises a resistive bridge and a leak is detected by the leak current unbalancing the bridge, then the leak is located by adjusting the variable resistor of the bridge.

Figure 1

Figure 2

Figure 3

Figure 4

**RÉFÉRENCES CITÉES DANS LA DESCRIPTION**

**Documents brevets cités dans la description**

- FR 2761154 A
- EP 0018916 A